# EUROPEAN PATENT APPLICATION

(11) **EP 2 204 890 A2**
(43) Date of publication of application: **07.07.2010**
(21) Application number: 09180675.2
(22) Date of filing: 23.12.2009
(51) Int. Cl.: H02G 3/14, H02B 1/00

(54) **Mounting rack for electrical elements**

(30) Priority: 30.12.2008 ES 200803743
(71) Applicant: Schneider Electric Espana, S.A., 08019 Barcelona (ES)
(72) Inventor: Ariz Arnedo, Javier, 31012, Pamplona (NAVARRA) (ES)
(74) Representative: Cabinet Plasseraud

(57) **Abstract**

The invention relates to a mounting rack for electrical elements formed by a body (1) like a frame, which in an edge of the inner contour has a rigid flange (2) which is backwardly projected and in the opposite edge of said inner contour a flange (3) which is attached to the body (1) with the possibility of laterally bending towards the outside, allowing the coupling of electrical mechanism functions (4) by means of the insertion through the rear part of the body (1).

## Description

### Field of the Invention

The present invention relates to electrical mechanisms of domestic installations or the like, proposing a rack which allows mounting the mechanism function, both through the front part and through the rear part, which provides a versatility facilitating the work of the mounting operators, since they can choose to perform the mounting in the manner that is most suitable for them in each case.

### State of the Art

The electrical mechanisms of domestic installations and the like generally consist of a function integrating the functional assembly of the mechanism and a support rack with respect to which the function for establishing the fastening in the application site is incorporated.

The support racks for this application conventionally have an anchor which allows fastening the mechanism function by means of a snap-in coupling by means of toothed elastic pins of the function itself, such that the coupling of the mounting is carried out by means of inserting under pressure the function in the rack until the snap-in is established.

In conventional embodiments, however, the anchor determining the support rack has a formation which requires mounting the mechanism function by means of the insertion through the front part, which establishes a limitation since the functions cannot be mounted on the rack with the electrical cables connected, which in some cases may be of interest to facilitate the work of the installers.

### Object of the Invention

According to the invention a support rack for the electrical mechanisms is proposed, with a structural formation determining very advantageous features, since it allows mounting the electrical mechanism function by means of the insertion both through the front part and through the rear part.

This rack object of the invention comprises a body like a frame, which in the inner edge has a rigid flange longitudinally determining a step, whereas in the opposite inner edge there is defined a flexible flange, which also longitudinally determines a step.

A rack is thus obtained which, by means of opposite inner flanges, defines seat supports for mounting the electrical mechanism function, as opposed to a snap-in of the toothed elastic pins of the function, the coupling being able to be carried out by means of inserting the function through the front part, as a result of the bending of the pins of the function, or through the rear part, as a result of the bending of the flexible flange of the frame.

According to a preferred embodiment, the flexible flange of the frame is provided divided into partial segments like pins, which favors the coupling of mechanism functions of different widths, since in each case it is only necessary to bend the segments or pins corresponding to the width of the function to be incorporated.

Therefore, said frame object of the invention has truly advantageous features, acquiring its own identity and a preferred character for the application for which it is intended, compared to the conventional racks of the same application.

### Description of the Drawings

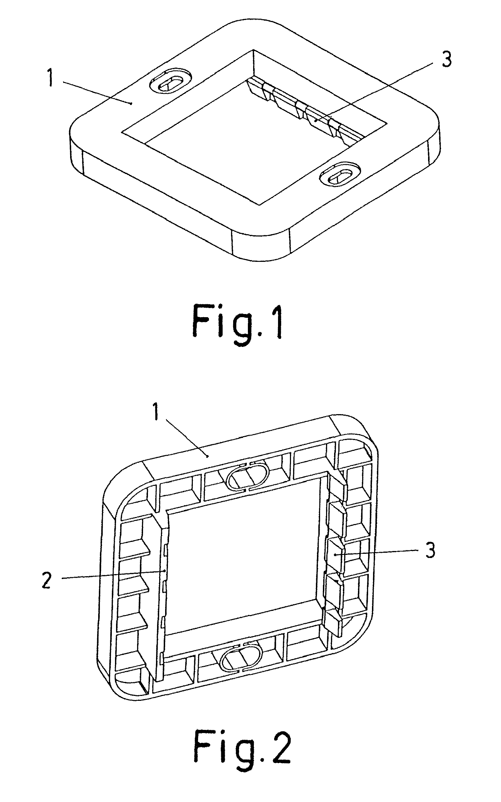

Figure 1 shows a front perspective view of a rack for electrical mechanisms made with the features of the invention.
Figure 2 is a perspective view of the same rack observed by the rear part.

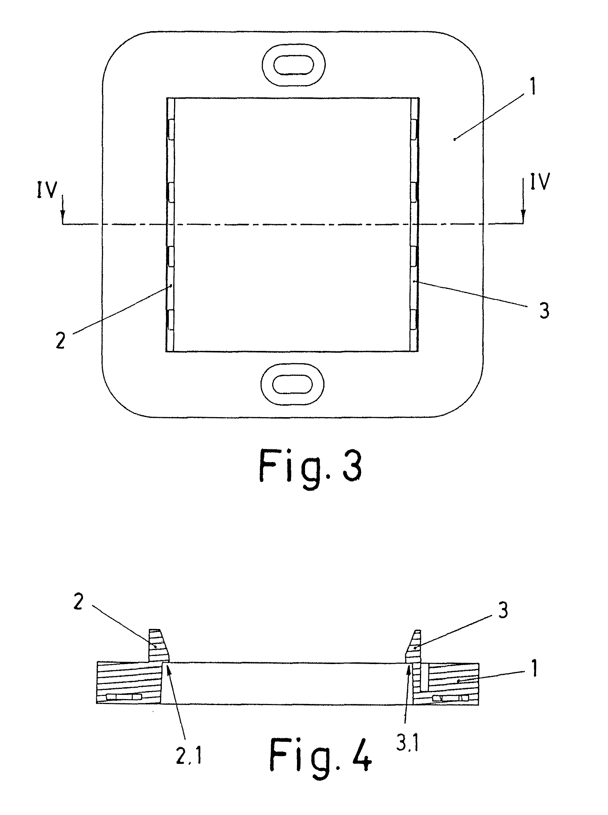

Figure 3 is a front view of the rack.
Figure 4 is a cross-section view of the rack, according to the indication IV-IV shown in the previous figure.
Figure 5 is an exploded perspective view of the mounting of an electrical mechanism function through the front part of the rack.
Figure 6 is a sectional view of the assembly of the previous figure mounted.
Figure 7 is an exploded perspective of the mounting of an electrical mechanism function through the rear part of the rack.
Figure 8 is a sectional view of the assembly of the previous figure mounted.

### Detailed Description of the Invention

The object of the invention relates to a rack intended for mounting electrical mechanisms in the installations of application thereof, with features allowing the coupling of the electrical mechanism functions through the front part or through the rear part of the rack.

The proposed rack consists of a body (1) like a frame, arranging in an edge of the inner contour a rigid flange (2) which is backwardly projected and configured with a longitudinal step (2.1) at the inner part, whereas in the opposite edge of the inner contour there emerges in a likewise backward projection another flange (3.1), also formed with a longitudinal step (3.1) at the inner part, but this flange (3) being attached with respect to the body (1) in such a way as to allow it to laterally bend towards the outside.

Thus, the mentioned flanges (2 and 3) located in opposite positions determine with their steps (2.1 and 3.1) seats for the support of the electrical mechanism functions (4) in the mounting on the rack, with a snap-in retention by means of flexible pins (5) of the functions (4) themselves, according to the conventional manner.

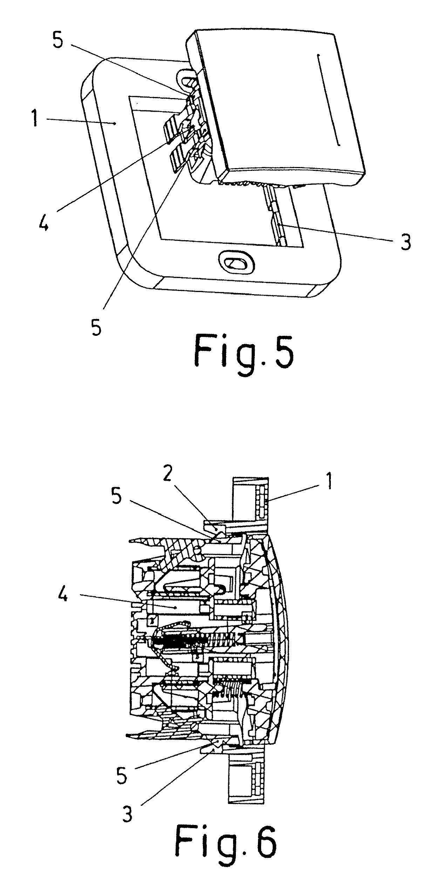

With this embodiment of the rack according to the invention, the electrical mechanism functions (4) can be coupled with respect to the body (1) of the rack by means of the insertion through the front part, as depicted in Figure 5, the coupling being performed by means of the forced insertion of the function (4) in the inner cavity of the body (1) of the rack, forcing the deformation of the flexible pins (5) of the function (4), until they reach a position in which they fit with respect to the corresponding conformations of the body (1) of the rack, establishing a retaining snap-in, as depicted in Figure 6.

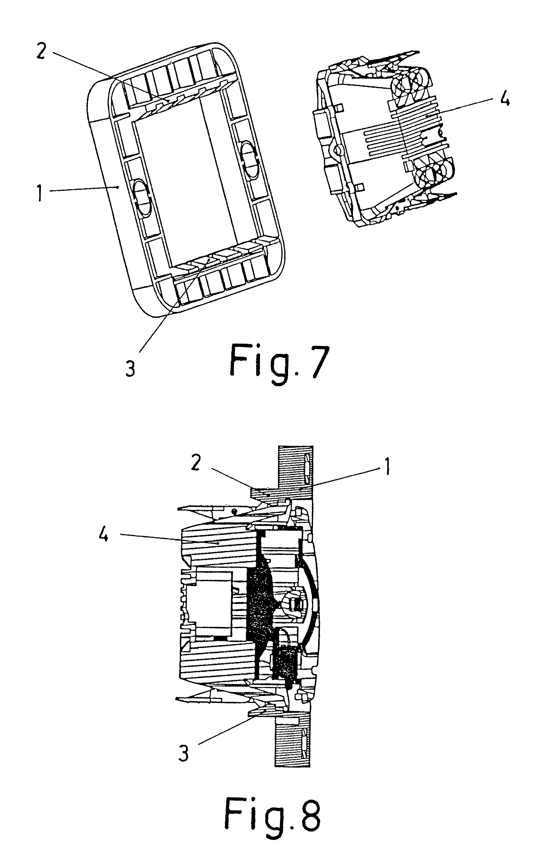

But, likewise, the electrical mechanism functions (4) can also be coupled with respect to the body (1) of the rack through the rear part, as depicted in Figure 7, the coupling in this case being performed by means of fitting an edge of the function (4) in the step (2.1) of the rigid flange (2) of the body (1) of the rack, and then by means of a forced tilting of the function (4), forcing with it the deformation of the flexible flange (3) of the body (1) of the rack, until reaching the fitting in the step (3.1) of said flexible flange (3), as depicted in Figure 8, in which position the retaining snap-in of the flexible pins (5) of the function (4) coincides on the corresponding conformations of the body (1) of the rack.

This possibility of inserting the electrical mechanism function (4) through the rear part of the body (1) of the rack allows performing the mounting with the function (4) connected to the electrical cables of the installation, which provides an advantageous option for the installers in some cases.

According to a preferred embodiment, the flexible flange (3) of the body (1) of the rack is determined divided into segments like pins, which allows the adaptation to electrical mechanism functions (4) of different widths, facilitating the mounting, since it is only necessary to bend in each case the segments of said flange (3) corresponding with the width of the electrical mechanism function (4) to be incorporated.

## Claims

1. A mounting rack for electrical elements, of the type comprising a body (1) in the form of a frame, determining in the inner edge support conformations for the seat of the electrical mechanism functions (4) and fitting conformations for a retaining snap-in of flexible pins of said electrical mechanism functions (4), **characterized in that** the body (1) in the form of a frame has in an edge of the inner contour a rigid flange (2) which is backwardly projected and provided with a longitudinal step (2.1) at the inner part, whereas in the opposite edge of the inner contour of the mentioned body (1) in the form of a frame, there emerges backwardly a flange (3) also provided with a longitudinal step (3.1) at the inner part, this flange (3) being attached to the body (1) by means of an attachment allowing it to laterally bend towards the outside, said flexible flange (3) enabling the coupling of the electrical mechanism functions (4) by means of the insertion through the rear part of the body (1) in the form of a frame.

2. The mounting rack for electrical elements according to claim 1, **characterized in that** the flexible flange (3) is determined divided into partial segments like pins, allowing the adaptation to electrical mechanism functions (4) of different widths.
